# FASCICULE DE BREVET EUROPEEN

(11) **EP 0 663 930 B1**
(45) Date de publication et mention de la délivrance du brevet: **09.09.1998**
(21) Numéro de dépôt: 93922001.8
(22) Date de dépôt: 06.10.1993
(51) Int. Cl.: C08G 18/67, C08G 18/68

(54) **COMPOSITIONS DE RESINES CHARGEES MOULABLES EN FEUILLES APTES A ETRE TRANSFORMEES PAR COMPRESSION ET LEUR APPLICATION A LA PRODUCTION DE PIECES MOULEES**
ZUSAMMENSETZUNGEN VON GELADENEN ZU BAHNEN FORMBAREN UND DURCH PRESSEN TRANSFORMIERBAREN HARZEN, SOWIE IHRE VERWENDUNG BEI DER HERSTELLUNG VON FORMKÖRPERN
CHARGED SHEET MOULDABLE RESIN COMPOSITIONS TRANSFORMABLE BY COMPRESSION AND APPLICATION THEREOF IN THE PRODUCTION OF MOULDED PARTS

(30) Priorité: 09.10.1992 FR 9212009
(43) Date de publication de la demande: 26.07.1995
(73) Titulaire: CRAY VALLEY SA, 92800 Puteaux (FR); Société Anonyme dite: REGIE NATIONALE DES USINES RENAULT, 92109 Boulogne Billancourt (FR)
(72) Inventeur: LECOINTE, Jean-Philippe, F-60160 Montataire (FR); KASSAMALY, Asmina, 92500 Rueil Malmaison (FR); PASCAULT, Jean-Pierre, F-60100 Villeurbanne (FR)
(74) Mandataire: Jolly, Jean-Pierre
(86) Numéro de dépôt international: FR9300987
(87) Numéro de publication internationale: WO9409049

(56) Documents cités:
- EP-A- 0 007 778
- EP-A- 0 020 041
- EP-A- 0 132 295
- FR-A- 2 231 703

## Description

La présente invention se rapporte à des compositions chargées à base de résines durcissables, en particulier de polyesters insaturés, moulables en feuilles et transformables par compression.

On connaît déjà des compositions moulables en feuilles comprenant des charges minérales en poudre, des fibres de verre longues, une résine polyester insaturée et un polyisocyanate organique, transformables par compression et utiles pour la fabrication de pièces moulées pour l'industrie automobile.

Par ailleurs il est connu d'épaissir une résine polyester insaturée, comprenant d'une part le produit de la polycondensation d'un acide ou anhydride dicarboxylique α, β- éthyléniquement insaturé et d'un dialcool ou d'un oxyde d'alkylène et d'autre part un monomère éthyléniquement insaturé - de préférence vinylaromatique - copolymérisable avec ledit produit de polycondensation, en la faisant réagir avec un polyisocyanate organique. Cette réaction, par la formation de liaisons uréthanes, entraîne une rigidication de la chaîne polymère et par conséquent des propriétés mécaniques améliorées pour le matériau résultant. Toutefois un inconvénient de cette méthode d'épaississement de la résine polyester insaturée réside dans la très forte sensibilité de l'évolution de la viscosité du système au dosage du polyisocyanate organique, toute erreur dans ce dosage - erreur d'autant plus probable que la quantité de polyisocyanate organique à introduire est faible - entraîne des fluctuations importantes des résultats de l'épaississement et par conséquent de la qualité du matériau obtenu.

Le problème que la présente invention vise à résoudre consiste donc à définir une méthode d'épaississement de résine polyester insaturée chargée au moyen de polyisocyanate organique qui évite les fluctuations importantes de qualité du matériau tout en continuant à assurer à celui-ci des propriétés mécaniques au moins de même niveau moyen que celui des méthodes connues jusqu'à présent. Ce besoin se fait tout particulièrement sentir pour la mise au point de formulations adaptées à l'obtention de compositions moulables en feuilles (dites SMC d'après l'abréviation anglaise correspondante) et transformables par compression, qui comportent généralement des fibres de verre longues, des charges minérales en poudre ainsi que le cas échéant divers additifs (catalyseur, retardateur de flamme, pigment, etc.). Le moulage de ces compositions par compression permet notamment de fabriquer des pièces de grande surface pour l'industrie automobile, telles que poutres, faces avant, pare-chocs, portes et hayons arrière.

On connaît par les documents FR-A-2.231.703, EP-A-007.778, EP-A-132.295 et EP-A-0020.041 des résines uréthane-ester vinylique obtenues par réaction d'un polyisocyanate, d'un ester à terminaison hydroxyle de l'acide acrylique ou méthacrylique et d'un polyoxyalkylène bisphénol A. Certaines d'entr'elles permettent, par addition de fibres de verre longues, d'obtenir des compositions moulables en feuilles qui sont ensuite moulées par compression à 140°C pendant 5 minutes. D'autres permettent d'obtenir des compositions réticulées à température ambiante pendant 24 heures.

Pour résoudre le problème technique posé, un premier objet de la présente invention consiste en des compositions moulables en feuilles susceptibles d'être obtenues par :
- préparation d'un mélange :
   - d'au moins une résine polyester insaturé qui est un polyester polyol de fonctionnalité en groupement hydroxyles au moins égale à 1,5, obtenu par polycondensation d'acides ou d'anhydrides polycarboxyliques α,β éthyléniquement insaturés, le cas échéant en mélange avec des acides ou des anhydrides polycarboxyliques saturés, et de diols aliphatiques saturés, la masse moléculaire de ladite résine étant comprise entre 250 et 5000 ;
   - d'au moins un diisocyanate organique,
   - d'au moins un (alk)acrylate hydroxylé,
   - d'au moins un monomère éthyléniquement insaturé copolymérisable avec la résine polyester insaturé afin de générer une structure réticulée ;
   - de charges minérales en poudre, présentes à raison de 25 à 300 parties en poids pour 100 parties en poids du polyester insaturé et du monomère éthyléniquement insaturé ; et
   - de fibres de verre de longueur au moins égale à 25 mm, présentes à raison de 20 à 50 parties en poids pour 100 parties en poids du mélange de polyester insaturé, de monomère éthyléniquement insaturé et de charges minérales en poudre ;
- maintien du mélange pendant au moins 12 heures à une température comprise entre 20°C et 50°C.

La masse moléculaire de la résine polyester insaturée peut varier plus particulièrement entre 350 et 2500. Sa teneur en eau ne doit pas être supérieure à 3000 ppm environ, de préférence pas supérieure à 1000 ppm environ.

Des acides ou anhydrides polycarboxyliques insaturés utilisables comprennent notamment les acides maléique, fumarique, chloromaléique, citraconique, métaconique, itaconique, tétraconique ou similaires ou, lorsqu'ils existent, les anhydrides correspondants. Des acides ou anhydrides polycarboxyliques saturés utilisables pour remplacer partiellement, par exemple jusqu'à 95 % en moles environ, et de préférence jusqu'à 45 % en moles environ, les acides ou anhydrides insaturés, comprennent notamment les acides orthophtalique, isophtalique, téré-phtalique, succinique, méthylsuccinique, adipique, sébacique, tétrabromo-phtalique, tétrachlorophtalique, glutarique, pimélique ou similaires ou, lorsqu'ils existent, les anhydrides correspondants.

Parmi les alcools polyhydriques utilisables, on préfère généralement les diols aliphatiques saturés tels que l'éthylène glycol, le propylène glycol, le butylène glycol, le diéthylène glycol, le dipropylène glycol, le triéthylène glycol, le tétraéthylène glycol, le 1,3-butanédiol, le 1,4-butanédiol, le tripropylèneglycol, le pentanédiol, l'hexanédiol et le néopentylglycol.

Lorsque la résine polyester insaturée est préparée à partir d'anhydride maléique, il est avantageux d'effectuer leur préparation en présence de morpholine afin d'augmenter le taux d'isomérisation des fonctions maléates en fonctions fumarates. La quantité de morpholine utilisée dans ce cas peut atteindre jusqu'à 1 % en poids, et est de préférence comprise entre 0,1 % et 0,5 % en poids du polyester.

Un autre composant de la composition moulable en feuilles selon l'invention est le monomère éthyléniquement insaturé copolymérisable avec le polyester insaturé afin de générer une structure réticulée. Ce monomère peut être choisi parmi le styrène, les styrènes substitués comme le vinyltoluène, le tertio-butylstyrène, l'alphaméthylstyrène, le chlorostyrène, le dichlorostryrène, les esters d'alkyle inférieur (C₁ à C₈) d'acide acrylique et d'acide méthacrylique, les acrylates et méthacrylates cycliques, comme ceux de cyclohexyle et de benzyle, les méthacrylates et acrylates bicycliques comme ceux d'isobornyle, le phtalate de diallyle, le maléate de diallyle, le fumarate de diallyle, le cyanurate de triallyle, l'acétate, le crotonate et le propionate de vinyle, le divinylether, les diènes conjugués tels que le butadiène-1,3, l'isoprène, le 1,3-pentadiène, le 1,4-pentadiène, le 1,4-hexadiène, le 1,5-hexadiène, le 1-9-décadiène, le 5-méthylène-2-norbornène, le 5-vinyl-2-norbornène, les 2-alkyl-2, 5-norbornadiènes, le 5-éthylidène-2-norbornène, le 5-(2-propenyl)-2-norbornène, le 5-(5-hexenyl)-2-norbornène, le 1,5-cyclooctadiène, le bicyclo [2,2,2] octa-2,5-diène, le cyclopentadiène, le 4,7,8,9-tétrahydroindène et l'isopropylidène tétra-hydroindène, et les nitriles insaturés tels que l'acrylonitrile et le méthacrylonitrile ainsi que les (méth)acrylates de polyol comme les diacrylates et diméthacrylates de l'éthylèneglycol, du propylèneglycol, du 1,3-butanédiol, du 1,4-butanediol, du 1,6-hexane-diol, du néopentyl-glycol, du 1,4-cycle-hexane-diol, du 1,4-cyclo-hexane-diméthanol, du 2,2,4-trimé-thyl-1,3-pentanédiol, du 2-éthyl-2-méthyl-1,3-propanédiol, du 2,2-diéthyl-1,3-propanédiol, du diéthylèneglycol, du dipropylèneglycol, du triéthylène-glycol, du tripropylèneglycol, du tétraéthylèneglycol, du tétrapropylène-glycol, du triméthyloléthane, du triméthylopropane, du glycérol, du pentaérythritol, les triacrylates et triméthacrylates du triméthyloléthane, du triméthylolpropane, du glycérol, du pentaerythritol, les tétraacrylates et tétraméthacrylates du pentaerythritol, les di(meth)acrylates à hexa(meth)-acrylates du dipentaerythritol, les poly(meth)acrylates de polyols mono- ou polyéthoxylés ou mono- ou polyproxylés tels que le triacrylate et le triméthacrylate du triméthyol-propane triéthoxylé, du triméthylolpropane tripropoxylé, le triacrylate et le triméthacrylate du glycérol tripropoxylé, le triacrylate, le triméthacrylate, le tétraacrylate et le tétraméthacrylate du pentaérythritol tétraéthoxylé, et leurs mélanges en toutes proportions.

La composition moulable en feuilles selon l'invention comprend également au moins une charge minérale pulvérulente, telle que carbonate de calcium, hydrate d'alumine, kaolin ou talc, présente à raison de 25 à 300 parties environ en poids pour 100 parties en poids du polyester insaturé et du monomère éthyléniquement insaturé.

La composition moulable en feuilles selon l'invention comprend aussi des fibres de verre longues, c'est-à-dire de longueur au moins égale à 25 mm environ, et peut en outre comporter des fibres de verre continues de manière à être transformable par compression, présentes à raison de 20 à 50 parties environ en poids pour 100 parties en poids du mélange de polyester insaturé, de monomère éthyléniquement insaturé et de charge minérale en poudre.

Le diisocyanate organique utilisable dans les compositions moulables selon l'invention peut être aliphatique, cycloaliphatique et/ou aromatique. Comme exemples on peut citer notamment le 4,4'-diphénylméthane diisocyanate, le 2,4- et le 2,6-toluènediisocyanate, l'isophorone diisocyanate, le tétraméthylène diisocyanate, le pentaméthylène diisocyanate, l'hexa-méthylène diisocyanate et le 4,4'-dicyclohexylméthane diisocyanate. Il peut aussi être utilisé sous forme de prépolymère du type polyurée ou polyuréthane de faible poids moléculaire, c'est-à-dire en faisant réagir l'un des diisocyanates désignés ci-dessus avec une polyamine ou un polyol de faible poids moléculaire. Dans ce dernier cas on préfère utiliser un alkylène glycol tel que le dipropylène glycol, le tripropylène glycol, le diéthylène glycol, le triéthylène glycol, le tétra-éthylèneglycol, le néopentylglycol, le 1,2- et le 1,3-butylène glycols. Il peut encore être utilisé sous la forme d'urétonimine en chauffant l'un des diisocyanates désignés ci-dessus à température élevée en présence d'un catalyseur phosphoré de manière à former un polycarbodiimide puis en faisant réagir ce dernier avec un autre groupe isocyanate, par exemple comme décrit dans le brevet US-A-4 014 935.

Par (alk)acrylate hydroxylé au sens de la présente invention, on entend un composé de formule générale 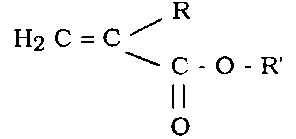 dans laquelle R est choisi parmi l'atome d'hydrogène et les radicaux alkyles ayant de préférence 1 à 4 atomes de carbone, et R' est un radical hydrocarboné, de préférence un radical alkyle, porteur d'au moins une fonction hydroxyle, située de préférence en extrémité de chaîne. Comme exemples de tels composés utilisables dans la présente invention pour former le produit de réaction constituant la phase polymère durcissable, on peut citer notamment les acrylates, méthacrylates et éthylacrylates d'hydroxylalkyle comme les (méth)acrylates de 2-hydroxyéthyle et d'hydroxypropyle, les esters acryliques ou méthacryliques partiels de composés di- ou polyhydroxylés comme le mono(méth)acrylate d'éthylène glycol, de propylène glycol-1,2 ou 1,3, de butylène glycol-1,4, d'hexaméthylèneglycol 1,6, de diéthylène glycol, de triéthylène glycol, de dipropylène glycol, le mono(méth)acrylate de glycérol, le mono(méth)acrylate de pentaérythritol, etc.

Pour l'efficacité de la présente invention, relativement à l'objectif technique visé tel qu'exprimé précédemment, les proportions de la résine polyester insaturée, du diisocyanate organique et de l'(alk)acrylate hydroxyle doivent de préférence suivre la règle : le produit de réaction des trois composés est formé à partir d'un mélange comprenant, pour 100 parties en poids de résine polyester insaturée, de 3 à 20 parties en poids environ d'(alk)acrylate hydroxylé et une quantité de diisocyanate organique calculée de telle sorte que le rapport molaire des fonctions -NCO du diisocyanate organique aux fonctions hydroxyle de l'(alk)acrylate hydroxyle, et de la résine polyester insaturé, r = NCO/OH, soit compris entre 0,6 et 1,1 environ et de préférence entre 0,75 et 0,95 environ. Cette règle correspond le plus souvent, en fonction du diisocyanate organique choisi et de l'(alk)acrylate hydroxyle choisi, à un rapport en poids diisocyanate organique / (alk)acrylate hydroxylé compris entre 1 et 6 environ et de préférence entre 1,2 et 4 environ.

La quantité de monomère éthyléniquement insaturé mise en oeuvre dans les compositions selon l'invention est une quantité conventionnelle pour des compositions moulables à base de résine polyester insaturée. Elle est donc généralement comprise entre 10 et 50 parties en poids environ pour 100 parties de résine polyester insaturée.

La phase polymère durcissable présente dans les compositions selon l'invention résulte soit de la réaction entre la résine polyester insaturée, le diisocyanate organique et l'(alk)acrylate hydroxylé soit de la réaction entre la résine polyester insaturée et le monoisocyanate éthyléniquement insaturé formé préalablement à partir d'un diisocyanate organique et d'un (alk)acrylate hydroxylé, ces deux modes d'obtention devant être considérés comme équivalents.

Les compositions moulables selon l'invention peuvent en outre comprendre :
- au moins un agent capable de former des radicaux à la température de moulage. Comme agents appropriés, on peut citer entre autres des peroxydes organiques, peroxydicarbonates et peroxyesters tels que le peroxyde de benzoyle, l'hydroperoxyde de butyle tertiaire, le peroxyde de butyle tertiaire, le peroxyde de dicumyle, le 2,2 bis (ter-butylperoxy) butane, le paracétal, le 1,1-bis (t-butylperoxy) 3,3,5-triméthyl cyclohexane, le perbenzoate de butyle tertiaire, le peroxyoctoate de butyle tertiaire, le ter-butyl peroxy isopropylcarbonate, le perisononanoate de butyle tertiaire, le permaléinate de butyle tertiaire, le péracétal cyclique, le 2,5-diméthyl-2,5-bis (2-éthylhexolperoxy) hexane, le peroxyde de méthyléthylcétone, le péroxyoctoate de tertioamyle, le 2,5-dipéroxy-octoate, ou encore le peroxyde de 2,4-pentanédione.
- au moins un agent thixotropique tel que la silice colloïdale ou l'argile pyrolysée à raison de 0,5 à 1,5 en poids environ pour 100 parties de composition.
- une quantité efficace d'au moins un inhibiteur de réticulation. Comme exemples d'inhibiteurs de réticulation utilisables, on peut citer notamment la phénothiazine, l'éther méthylique de l'hydroquinone, la N,N-diéthylhydroxyamine, le nitrobenzène, le di-tertiobutylcatechol, l'hydroquinone, le p-anilinophénol, le phosphite de di-(2-éthylhexyl)-octylphényle, le 2,5-ditertiobutyl-4-hydroxytoluène, le bleu de méthylène et leurs mélanges en toutes proportions. Une quantité efficace d'inhibiteur de réticulation est généralement comprise entre 0,01 % et 0,2 % en poids de résine polyester insaturée.
- au moins un retardateur de flamme tel qu'un hydrate d'alumine,
- au moins un pigment organique ou minéral,
- au moins une résine thermoplastique non réactive, telle que polystyrène, polyacétate de vinyle ou polyméthacrylate de méthyle, capable de réduire le phénomène de retrait de la résine polyester insaturée chargée pendant le moulage. Une telle résine peut être introduite sous forme de solution dans un monomère tel que le styrène.
- au moins un catalyseur de réaction des fonctions isocyanates avec la résine polyester insaturée, qui peut être choisi parmi :
   (a) des amines tertiaires telles que le bis (diméthylaminoéthyl) éther, le triméthylamine, la triéthylamine, la N-méthylmorpholine, la N-éthyl-morpholine, la N,N-diméthylbenzylamine, la N,N-diméthyl-éthano-lamine, la N,N,N',N'-tétraméthyl-1,3-butanediamine, la triéthylano-lamine, le 1,4-diazabicyclo [2.2.2.] octane et l'oxyde de pyridine.
   (b) des phosphines tertiaires telles que les trialkylphosphines et les dialkylbenzylphosphines,
   (c) des bases fortes telles que les hydroxyles, alcoolates et phénolates de métaux alcalins et alcalino-terreux,
   (d) des sels métalliques d'acides forts tels que les chlorures ferrique, stannique, stanneux et de bismuth, le trichlorure d'antimoine et le nitrate de bismuth,
   (d) des chélates tels que ceux pouvant être obtenus à partir d'acétylacétone, de benzoylacétone, de trifluoroacétylacétone, d'acétoacétate d'éthyle, de salicylaldéhyde, de cyclopentanone-2-carboxylate, d'acétylacétoimine, de bis-acétylacétonealkylènediimines, de salicylaldéhydeimine et à partir de métaux tels que le beryllium, le magnésium, le zinc, le cadmium, le plomb, le titane, le zirconium, l'étain, l'arsenic, le bismuth, le chrome, le molybdène, le manganèse, le fer, le cobalt et le nickel,
   (f) les alcoolates et phénolates de métaux tels que Ti(OR)₄, Sn(OR)₄, Sn(OR)₂ et Al(OR)₃ dans lesquels R est un groupe alkyle ou aryle,
   (g) des sels d'acides organiques et des métaux tels que les alcalins et alcalino-terreux, l'aluminium, l'étain, le plomb, la manganèse, le cobalt, le nickel et le cuivre, par exemple l'acétate de sodium, la laurate de potassium, l'hexanoate de calcium, les acétate, octoate et oléate stanneux, l'octoate de plomb, les naphténates de manganèse et de cobalt, et
   (h) les métaux carbonyles du fer et du cobalt et les dérivés organométalliques de l'étain tétravalent, de l'arsenic trivalent et pentavalent, de l'antimoine et du bismuth ; parmi ces dérivés on préfère plus particulièrement les sels de dialkylétain d'acides carboxyliques tels que le diacétate de dibutylétain, le dilaurate de dibutylétain, le maléate de dibutylétain, le diacétate de dilaurylétain, le diacétate de dioctylétain, le bis (4-méthylaminobenzoate) de dibutylétain, le bis (6-méthylaminocaproate) de dibutylétain, les hydroxydes de trialkylétain, les oxydes de dialkylétain, les dialcoxydes de dialkylétain et les dichlorures de dialkylétain.

Ce catalyseur est généralement utilisé à raison de 0,01 à 2 % en poids du diisocyanate présent dans le premier mélange.

L'(alk)acrylate hydroxylé caractéristique de la présente invention est parfaitement miscible dans le milieu organique constitué de la résine polyester insaturée du monomère éthyléniquement insaturé et du diisocyanate organique. On a pu observer que son introduction dans la composition n'induit pas une dégradation des propriétés mécaniques des pièces moulées à partir de cette composition, par rapport à celles moulées à partir de compositions n'en contenant pas. On a pu observer également que les pièces moulées en feuilles à partir des compositions selon l'invention présentent un meilleur aspect macroscopique que les pièces moulées à partir des compositions ne contenant pas d'(alk)acrylate hydroxylé, ce qui constitue un avantage évident pour la fabrication de pièces d'aspect pour l'industrie automobile. c'est-à-dire de pièces visibles du dehors du véhicule telles ques des éléments de carosserie.

Le mécanisme chimique présumé de la formation du produit de réaction dans la phase polymère durcissable est le suivant : l'une des fonctions isocyanates du diisocyanate organique réagit avec l'une des fonctions hydroxyles de la résine polyester insaturée, tandis que l'autre fonction isocyanate du diisocyanate organique réagit avec la fonction hydroxyle portée par le radical R' du composé de formule (I), cette double réaction conduisant à une structure qui peut être représentée comme suit : 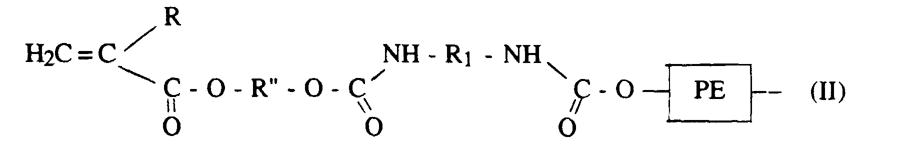 formule dans laquelle R a la même signification que dans la formule (I), R" est la fraction hydrocarbonée du radical R' de la formule (I), R₁ est la fraction hydrocarbonée du diisocyanate organique et PE désigne la séquence principale de la résine polyester insaturée.

La formation du produit de réaction dans la phase polymère durcissable s'accompagne d'une augmentation importante de la viscosité du mélange des constituants. Cette augmentation, qui peut atteindre une multiplication de la viscosité par un facteur allant de 30 à 100 environ, se produit de manière progressive dans le temps. La viscosité se stabilisant généralement après une durée de 12 à 24 heures environ, cette durée étant bien entendu dépendante de la température à laquelle le mélange des constituants est maintenu et étant d'autant plus courte que la température est plus élevée. Pour cette raison il est généralement souhaitable, et le plus souvent nécessaire, de maintenir le mélange pendant quelques heures, de préférence au moins 12 heures, à une température comprise entre 20°C et 50°C environ avant de procéder au moulage de la composition selon l'invention.

Un second objet de la présente invention consiste en effet en un procédé de moulage d'une composition selon l'invention - telle que décrite précédemment - comprenant les étapes suivantes :
(a) préparation d'un mélange comprenant au moins une charge minérale en poudre, au moins une résine polyester insaturée, au moins un monomère éthyléniquement insaturé, au moins un polyisocyanate organique, au moins un (alk)acrylate hydroxyle et au moins un agent capable de former des radicaux libres,
(b) distribution simultanée, dans une installation de production de feuilles, du mélange préparé à l'étape (a) d'une part et de fibres de verre longues d'autre part de manière à obtenir à la sortie de l'installation des feuilles de consistance pâteuse pouvant être coupées à la longueur désirée,
(c) transfert des feuilles obtenues à l'étape (b) vers un moule, et,
(d) moulage des feuilles par compression à une température comprise entre 100°C et 180°C environ pendant une durée suffisante pour provoquer la réticulation de la résine polyester insaturée par le monomère éthyléniquement insaturé,
et se caractérisant en ce que
- la résine polyester insaturé du mélange préparé à l'étape (a) est un polyester polyol de fonctionnalité en groupements hydroxyles au moins égale à 1,5 obtenu par polycondensation d'acides ou anhydrides polycarboxybques α,β insaturés, le cas échéant en mélange avec des acides ou anydrides polycarboxyliques saturés, et de diols aliphatiques saturés,
- le polyisocyanate organique est un diisocyanate, et en ce que
- les feuilles obtenues à l'étape (b) sont, avant l'étape (c), maintenues à une température comprise entre 20°C et 50°C pendant au moins 12 heures de manière à obtenir la stabilisation de leur viscosité.

A l'issue de l'étape (d), le matériau réticulé peut en outre être soumis à une phase de post-réticulation à une température de préférence comprise entre 150 et 180°C environ et pendant une durée de préférence comprise entre 10 et 120 minutes environ. La durée de moulage de l'étape (d) dépend bien entendu des proportions des composants du mélange préparé à l'étape (a) ainsi que des dimensions et de l'épaisseur des feuilles mais est généralement comprise entre 1 et 10 minutes environ. L'initiateur de radicaux libres introduit au cours de l'étape (a) a déjà été décrit précédement et doit être capable de former les radicaux à la température de moulage utilisée dans l'étape (d).

Un troisième objet de la présente invention consiste en des pièces moulées en feuilles obtenues à partir des compositions moulables selon l'invention (telles que décrites précédemment) ou par la mise en oeuvre du procédé de moulage décrit précédemment.

Il peut s'agir notamment de pièces de grande surface pour l'industrie automobile, telles que poutres, faces-avant, pare-chocs et portes. Comme déjà indiqué ces pièces présentent un aspect macroscopique avantageux par rapport aux pièces de l'art antérieur dont la phase polymère durcie ne comprend pas d'(alk)acrylate hydroxylé. Pour une mise en oeuvre plus efficace de la présente invention, il est souhaitable que la viscosité du mélange préparé dans l'étape (a) du procédé de moulage - c'est-à-dire avant son imprégnation par les fibres de verre longues - soit comprise entre 6 et 30 Pa.s environ et de préférence entre 10 et 20 Pa.s. A l'issue de l'étape (c) dudit procédé, la viscosité des feuilles atteint couramment des valeurs de l'ordre d'au moins 1 000 Pa.s.

Les exemples ci-après sont donnés à titre purement illustratif et non limitatif de la présente invention. Sauf indication contraire, toutes les quantités sont exprimées en poids.

### EXEMPLE 1 (comparatif)

Une résine polyester insaturé est obtenue par polycondensation de 100 parties d'anhydride maléique, de 88 parties de diéthylène glycol et de 22 parties de néopentyl glycol jusqu'à obtenir un polyester insaturé de masse molaire moyenne en nombre de 1000. Ce polyester a un indice d'acide de 18 et un indice d'hydroxyle de 87. Il est ensuite dilué dans le styrène en présence d'hydroquinone utilisée comme inhibiteur, jusqu'à ce qu'on obtienne une résine ayant un extrait sec de 63%.

A 100 parties de cette résine, on ajoute 13,9 parties de styrène, 40,2 parties de polyester saturé (polyadipate de butanediol et d'éthanediol à 50% en poids dans le styrene, d'indice d'hydroxyle 55 et d'indice d'acide 4) et 14,7 parties de 4,4'-diphénylméthane diisocyanate. La viscosité du mélange au bout de 24 heures, à 20°C, est de 75 000 Pa.s. Cette viscosité est trop élevée pour procurer une bonne mouillabilité des fibres de verre longues au cours de la préparation d'une composition chargée moulable en feuilles.

### EXEMPLE 2

A 100 parties de la résine polyester insaturée de l'exemple 1, on ajoute 13,9 parties de styrène, 40,2 parties du polyester saturé déjà utilisé à l'exemple 1, 7 parties de méthacrylate d'hydroxyéthyle et 21,5 parties de 4,4'-diphénylméthane diisocyanate. La viscosité du mélange au bout de 24 heures, à 20°C, est de 5 000 Pa.s et procure une bonne mouillabilité des fibres de verre longues au cours de la préparation d'une composition chargée moulable en feuilles.

### EXEMPLE 3 (comparatif)

Une résine polyester insaturé est obtenue par polycondensation de 88 parties d'anhydride maléique, de 99 parties d'anhydride isophtalique et de 174 parties de diéthylène glycol jusqu'à obtenir un polyester insaturé de masse molaire moyenne en nombre de 2800. Ce polyester a un indice d'acide de 5 et un indice d'hydroxyle de 35. Il est ensuite dilué dans le styrène en présence d'hydroquinone utilisée comme inhibiteur, jusqu'à ce qu'on obtienne une résine ayant un extrait sec de 65%.

A 100 parties de cette résine, on ajoute 6,8 parties de 4,4-diphénylméthane diisocyanate liquide commercialisé par DOW CHEMICAL sous la dénomination MDI 143 L et 100 parties de carbonate de calcium. La consistance du mélange obtenu se stabilise après 48 heures à une valeur de 1300 gf (grammes-force) trop élevée pour que la feuille obtenue soit parfaitement manipulable dans la phase de découpe qui précède son introduction dans le moule.

La consistance est déterminée au moyen d'un consistométre STEVENS LRFA dont le mobile cylindrique possède un diamètre de 3 mm et en procédant de la manière suivante : le mélange pâteux est stocké dans une enceinte conditionnée à 23°C et 50 % d'humidité relative ; le consistomètre est réglé à une vitesse de 0,2 mm/s, une distance d'enfoncement de 15 mm, un mode "normal" et un affichage de la charge réglé à "000" ; on place le récipient contenant le mélange de telle façon qu'il soit centré dans l'axe du mobile cylindrique du consistomètre et que le niveau du mélange soit entre 5 mm et 10 mm en dessous du bas du mobile cylindrique, puis on déclenche la descente du mobile cylindrique et on relève la charge exprimée en grammes sur le cadran digital ; on effectue au moins deux mesures successives et on calcule la charge moyenne en grammes-force.

### EXEMPLE 4

A 100 parties de la résine polyester insaturée obtenue à l'exemple 3, on ajoute 14,6 parties du diisocyanate MDI 143 L, 10 parties de méthacrylate d'hydroxyéthyle et 100 parties de carbonate de calcium. La consistance du mélange se stabilise après 48 heures à une valeur de 300 gf (grammes-force), déterminée comme précédemment correspondant à un semi-produit (feuille) parfaitement manipulable dans la phase de découpe qui précède son introduction dans le moule.

### EXEMPLE 5 (comparatif)

A 100 parties de la résine polyester insaturée obtenue à l'exemple 1, on ajoute 34,0 parties de styrène, 12,3 parties de 4,4'-diphénylméthane diisocyanate et 1,5 parties de perbenzoate de teritobutyle. Après avoir maintenu le mélange pendant 24 heures à 20°C, le moulage en feuilles est effectué à 130°C sous une pression de 100 bars pendant 10 minutes. Puis une post-cuisson d'une heure à 180°C est effectuée. La température de transition vitreuse du réseau obtenu, déterminée par des mesures viscoélastiques, est de 180°C.

### EXEMPLE 6

A 100 parties de la résine polyester insaturé obtenue à l'exemple 1, on ajoute 34 parties de styrène, 6,6 parties de méthacrylate d'hydroxyéthyle, 18,6 parties de diisocyanate commercialisé par BAYER sous l'appellation MDI 44 M et 1,5 partie de perbenzoate de tertiobutyle. Le mélange est moulé en feuilles dans les conditions de l'exemple 5. La température de transition vitreuse du réseau obtenu, déterminé par des mesures viscoélastiques, est de 190°C.

### EXEMPLE 7

Les propriétés mécaniques du matériau obtenu à partir de la formulation de l'exemple 4, à laquelle ont été ajoutés un initiateur de radicaux libres, un agent de démoulage et des fibres de verre longues, ont été déterminées comme suit :
a) Essais de flexion selon la Norme AFNOR T 51-001
   - Module de flexion 10500 MPa (sens transversal)
      11400 MPa (sens longitudinal)
   - Résistance à la rupture 230 MPa (sens transversal)
      295 MPa (sens longitudinal)
   - Flèche à la rupture 5,4 mm (sens transversal)
      6,7 mm (sens longitudinal)
b) Essais de choc Charpy suivant la Norme ISO 179/1D
   - Résilience volumique 2,6 J/cm³ (sens transversal)
      3,5 J/cm³ (sens longitudinal)

## Revendications

1. Compositions moulables en feuilles susceptibles d'être obtenues par :
- préparation d'un mélange :
- d'au moins une résine polyester insaturé qui est un polyester polyol de fonctionnalité en groupement hydroxyles au moins égale à 1,5, obtenu par polycondensation d'acides ou d'anhydrides polycarboxyliques α,β éthyléniquement insaturés, le cas échéant en mélange avec des acides ou des anhydrides polycarboxyliques saturés, et de diols aliphatiques saturés, la masse moléculaire de ladite résine étant comprise entre 250 et 5000 ;
- d'au moins un diisocyanate organique,
- d'au moins un (alk)acrylate hydroxylé,
- d'au moins un monomère éthyléniquement insaturé copolymérisable avec la résine polyester insaturé afin de générer une structure réticulée ;
- de charges minérales en poudre, présentes à raison de 25 à 300 parties en poids pour 100 parties en poids du polyester insaturé et du monomère éthyléniquement insaturé ; et
- de fibres de verre de longueur au moins égale à 25 mm, présentes à raison de 20 à 50 parties en poids pour 100 parties en poids du mélange de polyester insaturé, de monomère éthyléniquement insaturé et de charges minérales en poudre ;
- maintien du mélange pendant au moins 12 heures à une température comprise entre 20°C et 50°C de manière à obtenir la stabilisation de sa viscosité.

2. Compositions moulables en feuilles selon la revendication 1, caractérisées en ce que la résine polyester insaturée est préparée à partir d'anhydride maléique et en présence de morpholine.

3. Compositions moulables en feuilles selon la revendication 1 ou la revendication 2, caractérisée en ce que l'(alk)acrylate hydroxylé est un composé de formule générale 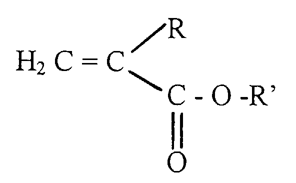 dans laquelle R est choisi parmi l'atome d'hydrogène et les radicaux alkyles ayant de préférence 1 à 4 atomes de carbone, et R' est un radical hydrocarboné, de préférence un radical alkyle, porteur d'au moins une fonction hydroxyle.

4. Compositions moulables en feuilles selon l'une des revendications 1 à 3, caractérisées en ce que la phase polymère durcissable est formée à partir d'un mélange comprenant, pour 100 parties en poids de résine polyester insaturée, de 3 à 20 parties en poids d'(alk)acrylate hydroxylé et une quantité de polyisocyanate organique calculée de telle sorte que le rapport molaire des fonctions -NCO du polyisocyanante organique aux fonctions hydroxyle de l'(alk)acrylate hydroxylé et du polyester insaturé, r = NCO/OH, soit compris entre 0,6 et 1,1.

5. Compositions moulables en feuilles selon l'une des revendications 1 à 4, caractérisées en ce que la quantité de monomère éthyléniquement insaturé est comprise entre 10 et 50 parties en poids pour 100 parties de résine poyester insaturée.

6. Compositions moulables en feuilles selon l'une des revendications 1 à 5, caractérisées en ce qu'elles comprennent en outre au moins un initiateur de radicaux libres.

7. Compositions moulables en feuilles selon l'une des revendications 1 à 6, caractérisées en ce qu'elles comprennent en outre au moins un agent thixotropique.

8. Compositions moulables en feuilles selon l'une des revendications 1 à 7, caractérisées en ce qu'elles comprennent en outre au moins un retardateur de flamme.

9. Compositions moulables en feuilles selon l'une quelconque des revendications 1 à 8, caractérisées en ce quelles comprennent en outre un inhibiteur de réticulation en une quantité comprise entre 0,01 % et 0,2 % en poids par rapport à la résine polyester.

10. Compositions moulables en feuilles selon l'une quelconque des revendications 1 à 9, caractérisées en ce quelles comprennent en outre au moins une résine thermoplastique non réactive qui est une résine polystyrène, polyacétate de vinyle ou polyméthacrylate de méthyle.

11. Compositions moulables en feuilles selon l'une quelconque des revendications 1 à 10, caractérisées en ce quelles comprennent en outre au moins un catalyseur de réaction des fonctions isocyanates avec la résine polyester insaturée.

12. Compositions moulables en feuilles selon l'une quelconque des revendications 1 à 11, caractérisées en ce quelles comprennent en outre au moins un agent de démoulage.

13. Procédé de moulage d'une composition moulable en feuilles, comprenant les étapes suivantes :
(a) préparation d'un mélange comprenant au moins une charge minérale en poudre, au moins une résine polyester insaturée, au moins un monomère éthyléniquement insaturé, au moins un polyisocyanate organique, au moins un (alk)acrylate hydroxylé et au moins un agent capable de former des radicaux libres,
(b) distribution simultanée, dans une installation de production de feuilles, du mélange préparé à l'étape (a) d'une part, et de fibres de verres de longueur au moins égale à 25mm environ d'autre part de manière à obtenir à la sortie de l'installation des feuilles de consistance pâteuse pouvant être coupées à la longueur désirée,
(c) transfert des feuilles obtenues à l'étape (b) vers un moule, et
(d) moulage des feuilles par compression à une température comprise entre 100°C et 180°C pendant une durée suffisante pour provoquer la réticulation de la résine polyester insaturée par le monomère éthyléniquement insaturé,
**caractérisé en ce que**
- la résine polyester insaturé du mélange préparé à l'étape (a) est un polyester polyol de fonctionnalité en groupements hydroxyles au moins égale à 1,5 obtenu par polycondensation d'acides ou anhydrides polycarboxyliques α,β insaturés, le cas échéant en mélange avec des acides ou anhydrides polycarboxyliques saturés, et de diols aliphatiques saturés,
- le polyisocyanate organique est un diisocyanate, et en ce que
- les feuilles obtenues à l'étape (b) sont, avant l'étape (c), maintenues à une température comprise entre 20°C et 50°C pendant au moins 12 heures de manière à obtenir la stabilisation de leur viscosité.

14. Procédé de moulage selon la revendication 13, caractérisé en ce qu'à l'issue de l'étape (d), le matériau réticulé est en outre soumis à une phase de post-réticulation à une température comprise entre 150 et 180° C et pendant une durée comprise entre 10 et 20 minutes.

15. Procédé de moulage selon l'une des revendications 13 et 14, caractérisé en ce que la durée de moulage de l'étape (d) est comprise entre 1 et 10 minutes.

16. Procédé de moulage selon l'une des revendications 13 à 15, caractérisé en ce que l'initiateur de radicaux libres introduit au cours de l'étape (a) doit être capable de former les radicaux à la température de moulage utilisée dans l'étape (d).

17. Pièces moulées en feuilles obtenues à partir de compositions moulables selon l'une des revendications 1 à 12 ou par la mise en oeuvre du procédé de moulage selon l'une des revendication 13 à 16.

18. Pièces moulées en feuilles selon la revendication 17, caractérisées en ce que le diisocyanate organique est un diisocyanate insaturé.

## Patentansprüche

1. Zu Folien formbare Zusammensetzungen, die dadurch erhältlich sind, daß man:
- eine Mischung aus:
- mindestens einem Harz aus ungesättigtem Polyester, bei dem es sich um ein Polyester-Polyol mit einer Hydroxylgruppenfunktionalität von mindestens 1,5 handelt, das durch Polykondensation von α,β-ethylenisch ungesättigten Polycarbonsäuren bzw. -anhydriden, gegebenenfalls in Mischung mit gesättigten Polycarbonsäuren bzw. - säureanhydriden, mit gesättigten aliphatischen Diolen hergestellt wurde, wobei das Molekulargewicht des Harzes zwischen 250 und 5000 liegt,
- mindestens einem organischen Diisocyanat,
- mindestens einem hydroxylgruppenhaltigen (Alk)acrylat,
- mindestens einem mit dem Harz aus ungesättigtem Polyester copolymerisierbaren ethylenisch ungesättigten Monomer zur Bildung einer vernetzten Struktur,
- mineralischen Füllstoffen in Pulverform, die in einem Anteil von 25 bis 300 Gew.-Teilen pro 100 Gew.-Teilen ungesättigtem Polyester und ethylenisch ungesättigtem Monomer vorliegen und
- Glasfasern mit einer Länge von mindestens 25 mm, die in einem Anteil von 20 bis 50 Gew.-Teilen pro 100 Gew.-Teilen des Gemisches aus ungesättigtem Polyester, ethylenisch ungesättigtem Monomer und mineralischen Füllstoffen in Pulverform vorliegen, herstellt und
- die Mischung zwecks Stabilisierung ihrer Viskosität mindestens 12 Stunden bei einer Temperatur zwischen 20°C und 50°C hält.

2. Zu Folien formbare Zusammensetzungen nach Anspruch 1, dadurch gekennzeichnet, daß die Herstellung des Harzes aus ungesättigtem Polyester ausgehend von Maleinsäureanhydrid in Gegenwart von Morpholin erfolgt.

3. Zu Folien formbare Zusammensetzungen nach Anspruch 1 oder Anspruch 2, dadurch gekennzeichnet, daß es sich bei dem hydroxylgruppenhaltigen (Alk)acrylat um eine Verbindung der allgemeinen Formel 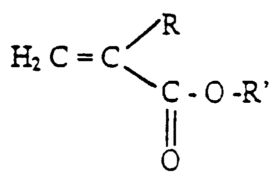 handelt, worin R aus der Gruppe bestehend aus Wasserstoffatom und Alkylresten mit vorzugsweise 1 bis 4 Kohlenstoffatomen ausgewählt ist und R' einen Kohlenwasserstoffrest, vorzugsweise einen Alkylrest, mit mindestens einer Hydroxylfunktion bedeutet.

4. Zu Folien formbare Zusammensetzungen nach einem der Ansprüche 1 bis 3, dadurch gekennzeichnet, daß die Bildung der Phase aus härtbarem Polymer ausgehend von einer Mischung erfolgt, die pro 100 Gew.-Teile des Harzes aus ungesättigtem Polyester, 3 bis 20 Gew.-Teile hydroxylgruppenhaltiges (Alk)acrylat und eine Menge an organischem Polyisocyanat enthält, die so berechnet ist, daß das Molverhältnis r = NCO/OH der -NCO-Funktionen des organischen Polyisocyanats zu den Hydroxylfunktionen des hydroxylgruppenhaltigen (Alk)acrylats und des ungesättigten Polyesters zwischen 0,6 und 1,1 liegt.

5. Zu Folien formbare Zusammensetzungen nach einem der Ansprüche 1 bis 4, dadurch gekennzeichnet, daß die Menge an ethylenisch ungesättigtem Monomer zwischen 10 und 50 Gew.-Teilen pro 100 Gew.-Teilen des Harzes aus ungesättigtem Polyester liegt.

6. Zu Folien formbare Zusammensetzungen nach einem der Ansprüche 1 bis 5, dadurch gekennzeichnet, daß sie außerdem mindestens einen Radikalinitiator enthalten.

7. Zu Folien formbare Zusammensetzungen nach einem der Ansprüche 1 bis 6, dadurch gekennzeichnet, daß sie außerdem mindestens ein thixotropes Mittel enthalten.

8. Zu Folien formbare Zusammensetzungen nach einem der Ansprüche 1 bis 7, dadurch gekennzeichnet, daß sie außerdem mindestens ein Flammschutzmittel enthalten.

9. Zu Folien formbare Zusammensetzungen nach einem der Ansprüche 1 bis 8, dadurch gekennzeichnet, daß sie außerdem einen Vernetzungsinhibitor in einer Menge zwischen 0,01 und 0,2 Gew.-%, bezogen auf das Polyesterharz, enthalten.

10. Zu Folien formbare Zusammensetzungen nach einem der Ansprüche 1 bis 9, dadurch gekennzeichnet, daß sie außerdem mindestens ein nichtreaktionsfähiges Thermoplastharz enthalten, bei dem es sich um ein Polystyrol-, Polyvinylacetat- oder Polymethylmethacrylatharz handelt.

11. Zu Folien formbare Zusammensetzungen nach einem der Ansprüche 1 bis 10, dadurch gekennzeichnet, daß sie außerdem mindestens einen Katalysator für die Umsetzung der Isocyanatfunktionen mit dem Harz aus ungesättigtem Polyester enthalten.

12. Zu Folien formbare Zusammensetzungen nach einem der Ansprüche 1 bis 11, dadurch gekennzeichnet, daß sie außerdem mindestens ein Formtrennmittel enthalten.

13. Verfahren zur Formgebung einer zu Folien formbaren Zusammensetzung, das aus folgenden Stufen besteht:
(a) Herstellung einer Mischung, enthaltend mindestens einen mineralischen Füllstoff in Pulverform, mindestens ein Harz aus ungesättigtem Polyester, mindestens ein ethylenisch ungesättigtes Monomer, mindestens ein organisches Polyisocyanat, mindestens ein hydroxylgruppenhaltiges (Alk)acrylat sowie mindestens ein Mittel, das zur Bildung von freien Radikalen befähigt ist,
(b) gleichzeitiges Vorlegen der in Stufe (a) hergestellten Mischung einerseits und langer Glasfasern mit einer Länge von mindestens etwa 25 mm andererseits in einer Folienherstellungsanlage, wobei bei Verlassen der Anlage Folien pastöser Konsistenz entstehen, die auf die gewünschte Länge geschnitten werden können,
(c) Überführen der in Stufe (b) erhaltenen Folien in eine Form sowie
(d) Preßformen der Folien bei einer Temperatur von 100°C bis 180°C während eines zur Vernetzung des Harzes aus ungesättigtem Polyester durch das ethylenisch ungesättigte Monomer ausreichenden Zeitraums
dadurch gekennzeichnet, daß
- das Harz aus ungesättigtem Polyester der in Stufe (a) hergestellten Mischung ein Polyester-Polyol mit einer Hydroxylgruppenfunktionalität von mindestens 1,5 ist, das durch Polykondensation von α,β-ungesättigten Polycarbonsäuren bzw. -anhydriden, gegebenenfalls in Mischung mit gesättigten Polycarbonsäuren bzw. -säureanhydriden und gesättigten aliphatischen Diolen hergestellt wurde, - das organische Polyisocyanat ein Diisocyanat ist und daß
- die in Stufe (b) erhaltenen Folien vor der Stufe (c) zwecks Stabilisierung ihrer Viskosität mindestens 12 Stunden bei einer Temperatur zwischen 20°C und 50°C gehalten werden.

14. Formgebungsverfahren nach Anspruch 13, dadurch gekennzeichnet, daß das vernetzte Material bei Verlassen der Stufe (d) außerdem einer 10 bis 20 Minuten dauernden Nachvernetzungsphase bei einer Temperatur zwischen 150 und 180°C unterzogen wird.

15. Formgebungsverfahren nach Anspruch 13 oder 14, dadurch gekennzeichnet, daß die Preßdauer der Stufe (d) zwischen 1 und 10 Minuten liegt.

16. Formgebungsverfahren nach einem der Ansprüche 13 bis 15, dadurch gekennzeichnet, daß der im Verlauf der Stufe (a) zugeführte Radikalinitiator bei der in Stufe (d) herrschenden Preßtemperatur zur Radikalbildung befähigt sein muß.

17. Zu Folien geformte Teile, hergestellt aus formbaren Zusammensetzungen nach einem der Ansprüche 1 bis 12 oder durch Durchführung des Formgebungsverfahrens nach einem der Ansprüche 13 bis 16.

18. Zu Folien geformte Teile nach Anspruch 17, dadurch gekennzeichnet, daß es sich bei dem organischen Diisocyanat um ein ungesättigtes Diisocyanat handelt.

## Claims

1. Sheet-mouldable compositions which are capable of being obtained by:
- preparation of a mixture:
- of at least one unsaturated polyester resin which is a polyesterpolyol with a hydroxyl group functionality of at least 1.5, obtained by polycondensation of α,β-ethylenically unsaturated polycarboxylic acids or anhydrides, if appropriate mixed with saturated polycarboxylic acids or anhydrides, and of saturated aliphatic diols, the molecular mass of the said resin being between 250 and 5000;
- of at least one organic diisocyanate,
- of at least one hydroxylated (alk)acrylate,
- of at least one ethylenically unsaturated monomer which is copolymerizable with the unsaturated polyester resin, so as to generate a crosslinked structure;
- of powdered inorganic fillers, which are present in a proportion of from 25 to 300 parts by weight per 100 parts by weight of the unsaturated polyester and of the ethylenically unsaturated monomer; and
- of glass fibres at least 25 mm in length, which are present in a proportion of from 20 to 50 parts by weight per 100 parts by weight of the mixture of unsaturated polyester, of ethylenically unsaturated monomer and of powdered inorganic fillers;
- maintenance of the mixture for at least 12 hours at a temperature of between 20°C and 50°C in order to stabilize its viscosity.

2. Sheet-mouldable compositions according to Claim 1, characterized in that the unsaturated polyester resin is prepared from maleic anhydride and in the presence of morpholine.

3. Sheet-mouldable compositions according to Claim 1 or Claim 2, characterized in that the hydroxylated (alk)acrylate is a compound of general formula 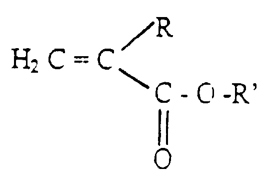 in which R is chosen from the hydrogen atom and alkyl radicals preferably having 1 to 4 carbon atoms and R' is a hydrocarbon radical, preferably an alkyl radical, carrying at least one hydroxyl functional group.

4. Sheet-mouldable compositions according to one of Claims 1 to 3, characterized in that the curable polymer phase is formed from a mixture comprising, per 100 parts by weight of unsaturated polyester resin, from 3 to 20 parts by weight of hydroxylated (alk)acrylate and an amount of organic polyisocyanate calculated such that the molar ratio of the -NCO functional groups of the organic polyisocyanate to the hydroxyl functional groups of the hydroxylated (alk)acrylate, and of the unsaturated polyester resin, r = NCO/OH, is between 0.6 and 1.1.

5. Sheet-mouldable compositions according to one of Claims 1 to 4, characterized in that the amount of ethylenically unsaturated monomer is between 10 and 50 parts by weight per 100 parts of unsaturated polyester resin.

6. Sheet-mouldable compositions according to one of Claims 1 to 5, characterized in that they additionally comprise at least one free radical initiator.

7. Sheet-mouldable compositions according to one of Claims 1 to 6, characterized in that they also comprise at least one thixotropic agent.

8. Sheet-mouldable compositions according to one of Claims 1 to 7, characterized in that they also comprise at least one flame retardant.

9. Sheet-mouldable compositions according to any one of Claims 1 to 8, characterized in that they also comprise a crosslinking inhibitor in an amount of between 0.01% and 0.2% by weight with respect to the polyester resin.

10. Sheet-mouldable compositions according to any one of Claims 1 to 9, characterized in that they also comprise at least one unreactive thermoplastic resin which is a polystyrene, poly(vinyl acetate) or poly(methyl methacrylate) resin.

11. Sheet-mouldable compositions according to any one of Claims 1 to 10, characterized in that they also comprise at least one catalyst for the reaction of the isocyanate functional groups with the unsaturated polyester resin.

12. Sheet-mouldable compositions according to any one of Claims 1 to 11, characterized in that they also comprise at least one demoulding agent.

13. Moulding process for a sheet-mouldable composition, comprising the following stages:
(a) preparation of a mixture comprising at least one powdered inorganic filler, at least one unsaturated polyester resin, at least one ethylenically unsaturated monomer, at least one organic polyisocyanate, at least one hydroxylated (alk)acrylate and at least one agent capable of forming free radicals,
(b) simultaneous distribution, in a sheet-production plant, of the mixture prepared in stage (a), on the one hand, and of glass fibres with a length of not less than approximately 25 mm, on the other hand, so as to obtain, at the outlet of the plant, sheets with a pasty consistency which can be cut to the desired length,
(c) transfer of the sheets obtained in stage (b) to a mould and
(d) moulding of the sheets by compression at a temperature of between 100°C and 180°C for a period of time which is sufficient to cause crosslinking of the unsaturated polyester resin by the ethylenically unsaturated monomer,
**characterized in that**
- the unsaturated polyester resin of the mixture prepared in stage (a) is a polyesterpolyol with a hydroxyl group functionality of at least 1.5, obtained by polycondensation of α,β-unsaturated polycarboxylic acids or anhydrides, if appropriate mixed with saturated polycarboxylic acids or anhydrides, and of saturated aliphatic diols,
- the organic polyisocyanate is a diisocyanate, and in that
- the sheets obtained in stage (b) are, before stage (c), maintained at a temperature of between 20°C and 50°C for at least 12 hours, in order to stabilize their viscosity.

14. Moulding process according to Claim 13, characterized in that, on conclusion of stage (d), the crosslinked material is additionally subjected to a post-crosslinking phase at a temperature of between 150 and 180°C and for a period of time of between 10 and 20 minutes.

15. Moulding process according to either of Claims 13 and 14, characterized in that the duration of moulding in stage (d) is between 1 and 10 minutes.

16. Moulding process according to one of Claims 13 to 15, characterized in that the free-radical initiator introduced during stage (a) must be capable of forming the radicals at the moulding temperature used in stage (d).

17. Sheet-moulded parts obtained from mouldable compositions according to one of Claims 1 to 12 or by the use of the moulding process according to one of Claims 13 to 16.

18. Sheet-moulded parts according to Claim 17, characterized in that the organic diisocyanate is an unsaturated diisocyanate.
